# EUROPEAN PATENT SPECIFICATION

(11) **EP 3 871 910 B1**
(45) Date of publication and mention of the grant of the patent: **26.07.2023**
(21) Application number: 20159967.7
(22) Date of filing: 28.02.2020
(51) Int. Cl.: B60H 1/00, G06V 20/59, G06V 10/764

(54) **REGULATION OF VEHICLE INTERIOR CLIMATE**
REGELUNG DES FAHRZEUGINNENRAUMKLIMAS
RÉGULATION DU CLIMAT INTÉRIEUR DE VÉHICULE

(43) Date of publication of application: 01.09.2021
(73) Proprietor: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: PIHLSGÅRD, Måns, 411 29 GÖTEBORG (SE); SETTERBERG, Johan, 416 79 GÖTEBORG (SE)
(74) Representative: Zacco Sweden AB

(56) References cited:
- WO-A1-2019/158887
- CN-A- 106 515 352
- CN-A- 107 576 022
- DE-A1-102017 200 909
- US-A1- 2005 267 646
- US-A1- 2016 363 340

## Description

### Technical field

The present invention relates to the field of climate regulation within vehicles. More specifically, the invention relates to a method for regulating onboard vehicle climate based on passenger specific clothing.

### Background art

Most vehicles of today are equipped with some sort of climate regulation system, which functions to provide a comfortable temperature within the vehicle during its operation. The climate regulation system may e.g. provide either cool or hot air based on a target temperature, which have typically been set by either the vehicle or by an onboard passenger of the vehicle. Several fans distributed within the vehicle typically serves to distribute and direct air streams do different areas within the car to achieve an overall comfortable temperature, or to specifically target certain areas to be cooler or warmer than others. Vehicle climate systems typically function based on mostly a few inputs, such as set target temperature and measured temperature deviation within the car. Such a system typically relies on the manual input form the passengers, and is typically fairly rigid in terms of climate adjustment. There is thus a need for improved climate regulation which may be fully or partly autonomous and further takes several inputs into consideration for regulating the climate within the vehicle.

Furthermore, vehicle climate systems may traditionally draw heat from an internal combustion engine which provides excess heat, but while the excess heat is generally otherwise lost there is still a need to improve efficiency of climate systems for a general reduction of energy consumption of vehicles. Electric vehicle generally do not constitute a similar source of excess heat, so while electric motor efficiency may be higher, climate system conditions may be more challenging and there is thus an analogue need for improved efficiency of climate systems for a general reduction of energy consumption of vehicles.

Examples of art in the field is US2005/267646A1 that discloses an air conditioning system for motor vehicle, and WO 2019/158887 A1 that discloses a motor vehicle thermal management system.

### Summary

It is an object of the present invention to mitigate, alleviate or eliminate one or more of the above-identified deficiencies and disadvantages in the prior art and solve at least the above mentioned problem. E.g. one object of some embodiments is to improve energy efficiency. Yet another object of some embodiments is to improve the experience of vehicle occupants. According to the invention as defined in claim 1, this is achieved by a method for regulating onboard vehicle climate, the method comprising determining a presence of an onboard passenger within the vehicle; determining a passenger offset factor of the onboard passenger by obtaining an image of the onboard passenger and detecting and identifying at least one insulation layer or garment type of the onboard passenger, wherein determining the passenger offset factor is based on the detected and identified at least one isolation layer or garment type; and controlling the onboard vehicle climate by adjusting a temperature offset based on the determined passenger offset factor of the onboard passenger.

One advantage with the above aspect is that the onboard vehicle climate is automatically regulated based on what a passenger is equipped with (such as clothes, body type, whether the passenger is a human or animal etc.). The climate will be regulated differently based on e.g. whether the same passenger wears clothing (the terms clothing and garments may be used interchangeably in this disclosure) which is identified as a thick winter jacket compared to clothing being identified as a jeans jacket. Hence, better granularity is achieved in the climate regulation compared to prior art solutions. Furthermore, with better granularity a possibility to more efficiently control the climate system is enabled.

Furthermore, the detection and identification of at least one insulation layer or garment type in an image has been found by the inventors to provide some benefits in for example that the identification is generally not qualitatively as sensitive to distance from the image obtaining means as compared to a pixel based measurement performed on an image, and in that identification and/or classification allows for more derivable data compared to data derivable from a measurement. Furthermore, with better or more data a possibility to more efficiently control the climate system is enabled.

Another advantage is that the method may continuously monitor a detected passenger and detect when e.g. clothing is removed or added and quickly respond by adjusting the climate such that the temperature perceived by the passenger is at constant comfortable level.

According to some embodiments, the method comprises determining a weight of the onboard passenger, and further basing the passenger offset factor on the determined weight.

On advantage with the above embodiment is that by taking the weight of the passenger into consideration in addition (or in some embodiments, as an alternative) to the type of garment and/or insulation layer of the passenger, (the weight may in some embodiments form part of the insulation layer), better granularity is achieved in the climate regulation compared to prior art solutions.

Another advantage with the above embodiments is that the weight determination may serve as an indication as to how much (and possibly heavy) clothing a passenger is wearing.

According to some embodiments, the method comprises obtaining a height of the present onboard passenger and determining a Body Mass Index of the onboard passenger value based on the determined weight and further control the onboard climate by adapting the temperature offset based on the determined BMI.

On advantage with the above embodiment is that better granularity is achieved in the climate regulation compared to prior art solutions.

According to some embodiments, the method comprises determining a classification of the present onboard passenger, wherein the classification comprises at least one of gender, and a determination of whether the onboard passenger is a human being or an animal.

One advantage with the above embodiment is that the classification may be tied to a preferred or wanted climate, which leads to that a certain classification may result in a certain default offset of the climate whenever that classification is identified. This may e.g. be used when training a system to perform the method according to some embodiments, and may lead to a fully or partly autonomously controlled climate regulation system needing little or no input from a user.

According to the invention, the method comprises generating a passenger profile for the present onboard passenger, wherein the passenger profile comprises the passenger classification, an image library of the passenger and a preferred target temperature of the passenger.

One advantage with the above embodiment is that a passenger may be associated with a personal profile which may be used as a starting point for regulating the climate whenever the presence of that specific passenger is detected. This may lead to a fully or partly autonomously controlled climate regulation system which may regulate the climate based on personal preferences without requiring additional input from the passenger.

According to some embodiments, the method comprises obtaining a temperature input from the onboard passenger, the input relating to the preferred target temperature, and adjusting the onboard vehicle temperature by further basing the passenger offset factor on the obtained temperature input.

One advantage with the above embodiment is that the manually inserted target temperature input may be used for training the system to map an identified insulation layer or garment type of a certain passenger with a preferred temperature. Furthermore, the manually inserted target temperature input may comprise or be interpreted as an absolute value as well as a difference or delta and a semantic relative input such as "colder" or "warmer", all of which may, respectively, provide a manually entered basis or feedback for training the system. The system may then apply this mapping for future references.

According to the invention, the at least one insulation layer or garment type is identified by cross referencing the obtained image to a library of images comprising different types of isolation layers and garments, and identifying the at least one insulation layer or garment type based on the cross referencing.

One advantage with the above embodiment is that a self learning algorithm is achieved for climate regulation, which may lead to a climate regulation that may improve over time as more data is gathered and used for the regulation.

According to some embodiments, the library further comprises images of different animal breeds and furs.

One advantage with the above embodiment is that not only humans may be taken into consideration for regulating the climate, but also other types of passengers such as animals.

According to some embodiments, the garment type is at least one of a type of clothing, and garment thickness

One advantage with the above embodiment is that a more detailed identification of the garment type may be made.

According to some embodiments, the insulation layer is at least one of body tissue, fur, and hair.

One advantage with the above embodiment is that the body size of a passenger together with attributes such as fur or hair may be used for determining a suitable climate. This may lead to a more exact regulation of climate in terms of personal preferences.

According to some embodiments, the method comprises labeling the obtained image with an indication of the identified at least one insulation layer or garment type and storing the image in the library for future references.

One advantage with the above embodiment is that a self learning algorithm is achieved for climate regulation, which may lead to a regulation that may improve over time as more data is gathered and used for the regulation.

According to some embodiments, the method comprises determining an outdoor climate, and further controlling the onboard vehicle climate by adjusting the temperature offset based on the determined outdoor climate.

One advantage with the above embodiment is that several inputs may be used for determining the onboard climate in addition to regulating a temperature offset based on identified insulation layer or garment type. In addition or as an alternative, the identification of the insulation layer or garment type may be used taking into consideration outside temperature. This may lead to increased correctness in identifying passenger clothing or fur in order to better regulate the climate.

According to some embodiments, the determined outdoor climate is used as an input for determining the passenger offset factor.

One advantage with the above embodiment is that several inputs may be used for determining the onboard climate in addition to regulating a temperature offset based on identified insulation layer or garment type. In addition or as an alternative, the identification of the insulation layer or garment type may be used taking into consideration outside temperature. This may lead to increased correctness in identifying passenger clothing or fur in order to better regulate the climate.

According to some embodiments, the method comprises determining whether there are empty seats within the vehicle and control the onboard vehicle climate by adjusting the temperature offset based on the determination of there being empty seats within the vehicle.

One advantage with the above embodiment is that climate zones may be established within the vehicle and that energy may be saved by directing climate regulation to a certain seat which contains a passenger rather than adjusting the overall interior climate.

According to the invention as defined in claim 10, there is provided a computer program product comprising a non transitory computer readable medium carrying a computer program comprising program instructions, the computer program being loadable into a data processing unit and configured to cause execution of the method according to any of claims 1-9 when the computer program is run by the data processing unit.

On advantage with the above aspect is that the method according to the first aspect may be transferred and carried out on different vehicles and/or computers.

According to the invention as defined in claim 11, there is provided a system for regulating onboard vehicle climate. The system comprising at least one camera and controlling circuitry configured to cause: determination of a presence of an onboard passenger within the vehicle; determination of a passenger offset factor of the onboard passenger by obtaining an image of the onboard passenger and detecting and identifying at least one insulation layer or garment type of the onboard passenger, wherein determining the passenger offset factor is based on the detected and identified at least one insulation layer or garment type; and controlling of the onboard vehicle climate by adjusting a temperature offset based on the determined passenger offset factor of the onboard passenger.

One advantage with the above aspect is that the onboard vehicle climate is automatically regulated based on what a passenger may be wearing. The climate will be regulated differently e.g. based on whether the passenger wears clothing (the terms clothing and garments may be used interchangeably in this disclosure) which is identified as a thick winter jacket compared to clothing being identified as a jeans jacket. Hence, better granularity is achieved in the climate regulation compared to prior art solutions.

According to the invention as defined in claim 12, there is provided a vehicle comprising the system according to claim 11.

One advantage with the above aspect is that a vehicle's onboard climate will be regulated with high granularity.

Effects and features of the claims 10,11,12 are to a large extent analogous to those described above in connection with claim 1. Embodiments mentioned in relation to claim 1 are largely compatible with claims 10-12.

The present invention will become apparent from the detailed description given below. The detailed description and specific examples disclose preferred embodiments of the invention by way of illustration only. Those skilled in the art understand from guidance in the detailed description that changes and modifications may be made within the scope of the appended claims.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present invention, will be more fully appreciated by reference to the following illustrative and non-limiting detailed description of example embodiments of the present invention, when taken in conjunction with the accompanying drawings.
Figure 1 shows a block diagram illustrating example method steps according to some embodiments;
Figure 2 shows a schematic drawing of an example system according to some embodiments;
Figure 3 shows a schematic drawing of an example system according to some embodiments;
Figure 4 shows a schematic drawing of an example vehicle comprising a system according to some embodiments; and
Figure 5 shows a schematic drawing of a computer program product according to some embodiments.

### Detailed description

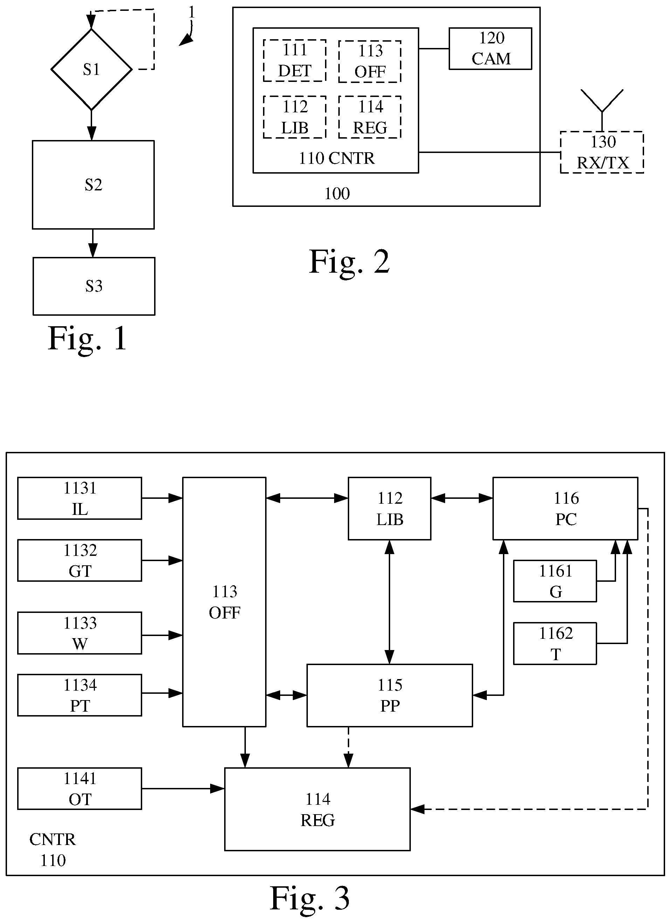

Figure 1 shows an example method 1 according to some embodiments. The method 1 may be for regulating onboard vehicle climate. The method starts in a first step comprising determining S1 a presence of an onboard passenger within the vehicle. Step S1 may be carried out continuously whenever the vehicle is in operation. E.g., the step comprising S1 may be executed when a vehicle door is opened and/or closed, when the vehicle is started (e.g. when the start key is turned/inserted and/or ignition ignited). The method may in S1 comprise monitoring the vehicle seats in order to detect the presence of a passenger. The presence of a passenger may be detected e.g. by means of a camera acquiring images of the interior of the vehicle and/or by means of sensors in the seat registering the addition or removal of a weight from the seat. If the presence of a passenger is detected (i.e. a passenger is detected within the vehicle), the method may continue to step S2. In some embodiments, if a passenger is not detected, the method may loop back to S1 with continued monitoring of the vehicle (this may e.g. apply if a driver has left the car but the key is still in the ignition or the motor is still running).

Then the method comprises determining S2 a passenger offset factor of the onboard passenger by obtaining an image of the onboard passenger and detecting and identifying at least one insulation layer or garment type of the onboard passenger. The image may e.g. be obtained from the camera used for detecting passenger presence. Determining the passenger offset factor is based on the detected and identified at least one insulation layer or garment type. It should be noted, that in some embodiments, the passenger offset factor is based on both the detected and identified at least one insulation layer and garment type. The method may e.g. comprise in some embodiments that the obtained image of the passenger is analyzed in order to determine and identify what a passenger is wearing and/or how much insulation the passenger has.

Then in the step comprising S3 the method comprises controlling the onboard vehicle climate by adjusting a temperature offset based on the determined passenger offset factor of the onboard passenger. The type of clothing and/or insulation layer may affect how a passenger perceive the onboard climate, and the method may take that into consideration when regulating the climate offset in order to reach a target temperature. The target temperature may be a default temperature, or a manually set temperature. The target temperature may be different to the passenger and a climate system which applies the method 1 in order to regulate the climate. E.g., in some embodiments, the system may e.g. indicate that the current temperature in the vehicle is 20 degrees Celsius, which may generally be perceived as representing a comfortable temperature. But it's cold outside and the passenger is wearing an insulating winter jacket, so without factoring in the jacket the cabin climate would probably be uncomfortably warm over time, resulting in some aggravation, readjustments or impairing attempts to remove the jacket while driving. Furthermore, the energy consumption would be inefficient.

The method 1 may however determine and identify that the passenger is wearing a thick winter jacket, and the method may hence comprise at least setting a target temperature which also maps to the clothing which the passenger is wearing and which target temperature may hence relate to the passenger offset factor. In this case it may e.g. mean maintaining a lower temperature compared to a temperature mapped to a passenger with a cardigan, and/or directing some of the air flow directly at the passenger, or at exposed parts of the passenger. However, the passenger may only see the preset 20 degrees input and hence perceive that a comfortable temperature is indeed set.

The method may comprising determining (e.g. as an addition or alternative in step S2 described above) whether the chosen target climate, including target temperature (i.e. the climate controlled based on the determined passenger offset factor) which is determined by the method (in the above example, the maintained temperature) was comfortable to the passenger, e.g. by monitoring whether the passenger often tries to manually change the temperature, or removes or adds clothing. The method may treat such adjustments as feedback input to the passenger offset model if detected during an ongoing trip. An initial input at the start of a trip may be treated as indication of a starting condition.

In a similar example, a passenger may manually adjust the temperature by inserting a wanted temperature. The system may e.g. indicate that the current temperature in the vehicle is 20 degrees Celsius, but it's cold outside and the passenger has just entered the car and therefore increases the temperature to 25 degrees. The passenger may then believe that the target temperature is 25 degrees (i.e. 25 degrees may be seen as a target by the passenger, but as indicated above this may rather be an indicative or fictional desired temperature).

The method 1 may however similarly to the previous example determine (e.g. in the method step comprising S2) that the passenger is wearing a thick winter jacket, and setting the actual temperature in the vehicle to 25 degrees will probably be felt as too warm by the passenger. The method may hence comprise setting a target temperature which corresponds to a temperature which maps to the clothing which the passenger is wearing and which target temperature may hence relate to the passenger offset factor (in this case it may e.g. mean maintaining the 20 degrees but initially directing some of the air flow with warm air directly at the passenger, or at exposed parts of the passenger to temporarily alleviate an indicated discomfort with the exterior climate, this controlling of the temperature may e.g. be carried out in the step comprising S3). However, the passenger may only see its own manual input and hence perceive that the target temperature (i.e. the desired temperature) of the passenger (i.e. 25 degrees Celsius) has been reached.

The steps comprising S2 and S3 described above may be carried out in a continuous fashion. E.g., the camera may obtain a stream of image data which monitors the passenger during the whole transit (or for as long as the passenger is in the vehicle), the images may be analyzed continuously in order to detect whether the passenger has e.g. added or removed items of clothing, and what type of clothing that has been removed. Based on this detection the climate may be adapted to fit the new outfit and/or insulation layer. This enables a climate system carrying out the method to react quickly to changes and automatically adapt the climate accordingly, which leads to an overall better and more comfortable climate experience for the passenger.

In some embodiments, the method may further comprise obtaining (e.g. in the step comprising S2) a height of the present onboard passenger and determining a Body Mass Index BMI of the onboard passenger

In some embodiments, the method may further comprise determining (e.g. in the step comprising S2) a weight of the onboard passenger, and further basing the passenger offset factor on the determined weight.

In some embodiments, the method may further comprise obtaining (e.g. in the step comprising S2) a height of the present onboard passenger and determining a Body Mass Index BMI of the onboard passenger value based on the determined weight and further control (e.g. in the step comprising S3) the onboard climate by basing the passenger offset factor on the determined BMI.

Passenger weight and/or BMI may e.g. be inputs relating to insulation layer. Hence, a passenger's physical appearance may be basis for the insulation layer, and attributes such as body fat, muscles and other tissues may be taken into consideration.

By basing the passenger offset factor also on a determined weight and/or BMI of a passenger a higher granularity in the climate regulation may be achieved. Furthermore, the determined weight and/or BMI may as mentioned be used for determining (e.g. in the step comprising S2) an insulation layer of the passenger. E.g., the method may comprise setting weight and/or BMI thresholds. If a determined weight exceeds a certain threshold, the passenger may be determined to have a certain amount of insulation layer in the form of either muscles of fat. This may affect how the passenger perceive temperature (as a generalization, a skinny person may e.g. perceive a certain temperature as too cold, whereas a heavier person may perceive the same temperature as too hot). The method may hence comprise regulating (e.g. in the method step comprising S3) the onboard climate based not only on what the passenger is wearing, but also on the actual corporal built of the passenger.

Typical thresholds relating to BMI may e.g. be a BMI under 19 indicates under weight, and the passenger offset factor may be determined such that it indicates that a higher temperature may be preferable. A BMI over 25 indicates overweight and the passenger offset factor may be determined such that it indicates that a lower temperature may be preferable.

Similarly, the obtained image may be analyzed in order to determine whether the detected passenger seems to be underweight, overweight, normal weight, muscular or non muscular. These inputs may then be used for basing the passenger offset factor in order adjust the temperature offset and thus control/regulate (e.g. as an addition or alternative in the method step comprising S3) (the terms may be used interchangeably in this disclosure) the onboard climate.

The weight sensors may also assist e.g. the method 1 in providing inputs regarding sudden changes in a passenger's detected/determined weight. E.g. if a passenger enters the vehicle and the sensors determine that the passenger weight 56 kg, but during transit this weight suddenly changes to 55 kg, it may serve as an indication that the passenger probably has removed an item of clothing (this input may e.g. be an addition or alternative in the method step comprising S2). This may be confirmed by analyzing the obtained images of the passenger and compare images of the passenger gathered when the passenger entered the car and current images. The change in weight may also function as an input for determining the garment type or insulation layer that was removed/added. A higher weight may e.g. be mapped to a thicker garment such as winter coat or jacket.

Furthermore, a desired temperature may be set per default or by the passenger (this may e.g. be an additional or alternative input in the method step S2), and the climate may be regulated to deviate from this desired temperature based on the passenger offset factor. In some embodiments, the method may use the passenger offset factor in order to determine the amount of energy needed in order to reach and maintain the desired temperature. E.g., a heavily clothed and or heavy passenger may need less heat in order to perceive the actual temperature as the desired temperature compared to a person dressed in lighter clothing or with less body mass. This is distinction may also be made for children contra adults or animals of various types.

In some embodiments, method 1 comprises determining a classification of the present onboard passenger, wherein the classification comprises at least one of gender, and a determination of whether the onboard passenger is a human being or an animal (determining a classification may be an additional or alternative input to the method step comprising S2).

The classification may be of assistance in order to provide a default setting for any passenger. E.g., the classification may indicate gender of a passenger and/or whether a passenger is a human being or an animal. This may affect the regulation of the climate. E.g., generally females are more prone to feeling cold than males. In a similar manner, a dog of a certain breed such as old English sheep dog usually holds more insulation in terms of fur and body mass than e.g. a Chihuahua. When a passenger is detected, the method may comprise mapping the passenger to a classification (e.g. male, female, child, adult, obese, under weight, old, young, animal, type of animal, etc.). This may be used to set e.g. a default temperature value based on preferred values of that class. When determining the passenger offset factor for a certain passenger, this value may be added to the classification in order to teach the method/algorithm of various traits of a certain class. In a sense, the method is taught how to generalize based on the classification data which may e.g. be averaged over time to produce a default temperature offset value which may be applied whenever a passenger belonging to a certain class is detected.

In some embodiments, the classification may serve to identify other objects such as e.g. grocery bags. If a grocery bag is detected in e.g. a trunk area of the vehicle or on a seat, the method may regulate the climate such that colder (or warmer) air is directed to the grocery bag based on e.g. the detected type of grocery bag/ware.

The classification may also serve to identify object such as e.g. flowers/flower pots or other plants. Flowers are often sensitive to cold air, and when such object are detected the method may regulate the climate such that warmer air is directed to the detected plants/flowers. Of course the method and classification enables the type of flower and/or plant to be identified and thus the climate regulated accordingly. Hence the detection of a plant may not necessarily mean that only warm air is directed to the plant. A bouquet of cut flowers may e.g. fare better if it receives colder air.

According to the invention, the method further comprises generating a passenger profile for the present onboard passenger, wherein the passenger profile comprises the passenger classification, an image library of the passenger and a preferred target temperature of the passenger. The preferred target temperature may e.g. be the desired temperature as discussed above (the generation of a passenger profile may serve as an additional or alternative input to the method step comprising S2).

The classification may e.g. be used in order to provide a default value for the temperature regulation. However, the method may enable personalized climate regulation by identifying a passenger and set up a personal passenger profile for that specific passenger. Inputs to the personal passenger profile may e.g. be the acquired (the term acquired may be used interchangeably with the term obtained in this disclosure) image of the passenger which may be stored in an image library comprising images of the passenger acquired over time. Other inputs may be a classification of the passenger. This input may be valuable for the method in order to determine how well the generalization provided by the classification works. E.g., is the passenger content with the default temperature value of the classification, or does the climate preferences of the passenger seem to deviate much (e.g. several degrees) and often from the default value of the classification. This may e.g. be determined by monitoring whether the passenger tries to manually change the climate settings more than once during its stay in the vehicle and/or whether the passenger adapts e.g. its clothing by removing or adding garments.

Further inputs to the personalized passenger profile may be a temperature input from the passenger. The method 1 may e.g. comprise obtaining a temperature input from the onboard passenger, the input relating to the preferred target temperature, and adjusting the onboard vehicle temperature by further basing the passenger offset factor based on the obtained temperature input.

The passenger may e.g. manually input a desired temperature. The method may use this input together with the identified at least one insulation layer and/or garment type to regulate the onboard vehicle climate to suit the passenger. The gathered data may then in some embodiments be fed to either or both personal profile or the classification in order to further teach the method to autonomously regulate the onboard vehicle climate for that specific passenger as well as for other passengers which have similar traits and/or wears similar clothing.

The personalized passenger profile may also comprise an input of a passenger weight. The method may use gathered weight inputs over time in order to detect if a currently detected weight is a default value for the passenger in question, or if it is affected by garment type and/or insulation layer. E.g. the personalized profile may indicate that the passenger weighs about 56 kg, and if the passenger enters the car and is suddenly determined to weigh 60 kg, the surplus kilos may be ascribed to items of clothing which the passenger is wearing. These additional item of clothing may then be used to base the current passenger offset factor and thus regulate the climate. As noted previously the sudden absence or addition of weight to a passenger may also be used to determine the type of clothing and/or insulation layer for regulating the climate. A small addition/removal to the weight may indicate the addition/removal of a light piece of clothing such as e.g. a cotton summer jacket or sweater. A larger addition/removal of weight may indicate the addition/removal of a heavier piece of clothing (and thus probably warmer piece of clothing) such as a coat or winter jacket. The climate may be adapted accordingly.

According to the invention, the method may comprise identifying (e.g. as an additional or alternative input to the method step comprising S2) the at least one insulation layer or garment type by cross referencing the obtained image to a library of images comprising different types of isolation layers and garments, and identifying the at least one insulation layer or garment type based on the cross referencing.

The library may comprise or, in some embodiments, form part of the image library associated with the onboard passenger (which library may be referred to as personal library in this disclosure). The library may comprise a multitude of different images or categories of different types of clothing/garments/insulation layers in various settings on various types of people. The obtained image may then be cross references against this library in order to determine a more exact type of garment and/or insulation layer of the passenger. The cross referencing may be done at different levels. It is e.g. contemplated that a first estimation may done on whether the passenger is wearing something on its upper body and/or lower body. Then the appearance of the passenger may be cross references against certain categories such as jackets, shirts, blouses, tank tops, or skirts, pants, panty hoses etc. in order to zoom in on an as detailed determination as possible. A further estimation may be to determine what type of fabric, or what type the clothing actually is. E.g., it may be determined whether the clothing is made of a thin fabric such as linen or polyester; a more coarse fabric such as cotton or denim, a thick fabric such as wool or fleece; that the jacket is a suit jacket, summer jacket, winter jacket, leather jacket etc.

The image library may also comprise different images of people and animals. E.g. the library may be a library comprising overweight, underweight, normal weight, muscular bodies, non-muscular bodies, children, adults, teens, females, males, animals, types of animals, different animal breeds etc. These images may be used e.g. in the classification profiles, but also to determine the traits of the detected passenger. Hence, it may be determined what a passenger is wearing, how the passenger is built, if the passenger is a male or female, if the passenger is a human or an animal, if the passenger is a child, teen, adult or old person etc. All of these traits may affect the personal temperature preferences of a passenger and may hence be taken into consideration when determining the passenger offset factor as well as regulating the onboard climate.

These inputs will also help teach the method over time to regulate the climate whenever a new passenger is detected, such that the climate will adapt to the personal preferences of each passenger with minimum input needed from the actual passenger.

The more training the method 1 gets, i.e. the more data that is input which may be associated to successful temperature regulation (i.e. the passenger is not changing the temperature set by the method) the quicker it will get in determining and correctly identifying an insulation layer and/or garment type.

As noted above, also animals may be taken into consideration for temperature regulation by the method 1 as described herein.

Hence, in some embodiments, the library may further comprise images of different animal breeds and furs.

Thus, the method may detect the presence of an onboard passenger (e.g. in the method step comprising S1), and from the obtained image (which may be cross referenced against the library) the method may determine that the passenger is in fact a cat (e.g. in method step comprising S2). A classification over cats may teach the method 1 that cats generally prefer warm temperatures and the method may hence provide warmer temperatures, despite the fact that the cat has a lot of fur. The amount of fur of the animal may be alternatively, or additionally, used to determine the insulation layer in order to regulate the temperature (e.g. in the method step comprising S3). If the animal is determined to have a lot of fur, even if it is a cat, the temperature may be set warm but still slightly lower than e.g. if a cat with little or short fur has been detected.

The library may comprise classification and images of all types of animals. The method 1 may e.g. be used for vehicles such as animal trailers that ships cattle, farm animals, circus animals, zoo animals or other types and my thus ensure that the temperature within the compartment that holds the animals is comfortable to the animals. It is e.g. a problem that a driver having e.g. a horse trailer connected to his/her vehicle has little or no way of knowing the actual temperature within the trailer and the method may be used to ensure that the animal at least has a comfortable climate for as long as it travels in the trailer.

In some embodiments, the method comprises labeling (the labeling may e.g. be carried out as an alternative or addition in the method step S2) the obtained image with an indication of the identified at least one insulation layer or garment type and storing the image in the library for future references.

The labeled image may further be associated with the personal profile of the passenger and used for future climate regulation whenever the passenger is detected within the vehicle.

As noted above, the labeling of the image may be done during transit, and may be verified when the passenger has left the vehicle by determining whether or not the passenger tried to often manually change the temperature setting in the vehicle. If the passenger tries to change the temperature often during transit, it is an indication that the climate was not regulated to the satisfaction of the passenger, and there may have been an error in the identification of the insulation layer or type of garment. The labeled image may in such cases be discarded, or saved in a separate library comprising images where the identification was deemed as unsuccessful. These images may be used to e.g. train the system to determine what type a garment or insulation layer isn't. E.g., the method may have identified a rain jacket made of a polyurethane coated fabric as a light summer jacket and based the passenger offset factor and regulated the climate accordingly. However, a jacket comprising a polyurethane coated fabric does not breathe very well and can therefore both in warm and cold temperatures become excruciatingly warm, especially since it not entirely uncommon that a person wears something thicker beneath it. If the temperature is based on a light summer jacket, the perceived temperature of the passenger wearing such a rain jacket may become too warm. Hence, if the obtained image comprised a jacket made from a polyurethane coated fabric, and the method determines the passenger offset factor and thus adjust the climate based on the identification that the jacket is a light summer jacket, the outcome may be that the passenger tries to manually change the temperature one or more time during transit in the vehicle or even removes the jacket entirely. This may lead the method to conclude that the identified summer jacket was not a light summer jacket, but something else which required cooler temperatures.

The method may in some embodiments thus comprise identifying additional features with the detected types of insulation and garment type in order to perform a correct identification (this may e.g. be an additional or alternative input obtained and/or carried out in the method step comprising S2). The method may e.g. comprise identifying a brand or logotype, determining a material type by determining color, fabric coarseness, fabric glossiness, how the fabric folds on the passenger, fabric volume etc. In the same manner, the method may comprise determining one or more of an amount of detected skin of the passenger, amount of fur, fur type (e.g. curly or straight, short, long) color of skin and/or fur etc.

This determination may e.g. be made by comparing and/or cross referencing the obtained image of the passenger with stored images of different types of clothing, different type of fabric, different type of persons and animals etc.

The method may comprise mapping these images to a desired or preferred climate, e.g. by storing information pertaining to what a passenger is wearing and whether or not that passenger tried to adjust the climate during transit in the vehicle, or what target temperature the passenger manually input to the climate system (this may e.g. be an additional or alternative input in the method step comprising S2). By gathering more and more data, the method will allow the system carrying out the method to teach itself to automatically regulate the climate based on e.g. what a passenger is wearing, and/or the built and type of passenger.

In some embodiments, the method may further comprise determining an outdoor climate, and further controlling the onboard vehicle climate by adjusting the temperature offset based on the determined outdoor climate.

In some embodiments, the determined outdoor climate is used as an input for determining the passenger offset factor.

E.g., in the above described cases the outdoor temperature may affect what a passenger is wearing. In winter, it is likely that a passenger is wearing a winter jacket. In summer, if the weather is bad, the jacket the passenger wears may be a polyurethane coated jacket as opposed to a light summer jacket. The identification of the insulation layer and/or type of garment may thus use the outside temperature as a further input for correct identification. It may also be contemplated that in addition to acquiring an outdoor temperature, a camera may obtain images of the outdoor surroundings in order to determine whether there e.g. is snow outside, sunny weather, storm, rain etc. Also, other systems of the vehicle may provide input to the method 1. The wipers of the vehicle may e.g. provide an indication on whether there is rain or snow falling outside.

In some embodiments, the method may further comprise determining (S2) whether there are empty seats within the vehicle and control the onboard vehicle climate by adjusting the temperature offset based on the determination of there being empty seats within the vehicle.

The vehicle may e.g. be divided into climate zones. There may e.g. be one zone for each vehicle seat. This may enable each passenger within the vehicle to set or experience an individualized climate in his or her zone which may not affect or bleed into another zone. This may e.g. be achieved by seat heaters and fans associated with each seat in addition or as an alternative to a centralized climate system. If only one passenger is detected in a vehicle having five seats, this may affect how the passenger perceives the climate, or how quickly the car heats up/cools down. E.g. if several passengers are detected in the vehicle, less energy may be needed to maintain the preferred temperatures in each zone (especially in cold weather. In warm weather it may be reversed, more energy is needed to keep a desired climate) since bodies tend to give of heat and thus also heat the interior of the vehicle. More people breathing the same air will also affect the air quality and this leads to a climate that is perceived as warm and stuffy. The passenger offset factor may then also be based on the number of detected passengers and be combined with any of the other inputs described above in order to regulate the onboard vehicle climate. Furthermore, the method may allow for improved comfort by determining individual passenger offset factors so that for example a passenger with a thick winter jacket would not have to compromise comfort by agreeing on a compromised desired temperature with a passenger wearing thinner clothing, in other words, both may see the same or a similar setting on the climate system (e.g. 20 degrees) and perceive a comfortable temperature while the method actually maintains two significantly different passenger offsets and controls two zones differently. Hence the method allows e.g. for one zone to be warmer and another to be colder based on what has been detected in the zones. The zones may e.g. be divided such that there is one zone per seat; Two or more zones per seat (e.g. an upper zone and a lower zone); and/or A zone for the trunk area. Other zones are contemplatable. The zones may e.g. be determined dynamically and change based on what has been detected in the passenger compartment and/or trunk area of the vehicle.

Furthermore, by detecting and identifying (S2) one or more garments on the same person, the method may further improve comfort and efficiency by e.g. providing seat heating on the bottom cushion but not the upper cushion for a passenger determined to be wearing jeans and a winter jacket, directed air flows may provide additional or alternative function in analogue manner.

Similarly, if only one passenger is detected power may be saved by focusing the climate regulation to the zone comprising the passenger. The empty zones may be subjected to a small amount of heating (if heat is desired) or cooling (if cold air is desired) in order to avoid the climate within the focused zone to disperse into the other zones. Furthermore, if the vehicle only comprises one passenger, this may affect the passenger offset factor in that more heat or cooling is needed in order to reach a desired temperature, taking into consideration identified insulation layer, garment type and/or any of the other above described inputs.

Hence, in some embodiments, step S1 may comprise monitoring the interior of the vehicle continuously (e.g. by having at least one camera monitoring the seats of the vehicle), or when an event is detected in order to determine whether the number of passengers within the vehicle has changed. The event may e.g. be that a vehicle door has opened and/or closed, that a seat sensor has detected the presence of a passenger, or the removal of a passenger, that the ignition has been turned off etc. Whenever such an event is detected one or more cameras may be caused to obtain an image of the seats in the vehicle in order to determine the presence or non-presence of a passenger.

Fig. 2 illustrates an example system 100 according to some embodiments. The example system 100 is for regulating onboard vehicle climate. The system 100 comprises at least one camera 120 (CAM) and controlling circuitry 110 (CNTR). In some embodiments, the system 100 may further comprise at least one sensor for determining an onboard passenger weight. In some embodiments, the system 100 may further comprise a transceiver circuit 130 (RX/TX) comprising one or more receiver and/or transmission antennas.

In some embodiments, the camera 120 is a RGB (RED, BLUE and GREEN) camera. In some embodiments, the camera 120 is a heat camera.

In some embodiments, the system 100 is configured to cause the method 1 as described in conjunction with Fig. 1.

In some embodiments, the controlling circuitry may further comprise a determiner (DET) 111, a library (LIB) 112, an Offset factor module (OFF) 113, and a regulating module (REG) 114. These functional modules will be described more in conjunction with Fig. 3.

The controlling circuitry 110 is configured to cause determination of a presence of an onboard passenger within the vehicle. The controlling circuitry 110 may e.g. cause the camera to obtain an interior image (or image stream) of the vehicle and transmit the image to the controlling circuitry 110. The controlling circuitry may then be configured to analyze the obtained image in order to determine whether there is a passenger present. In addition, or as an alternative to obtaining the image from the camera 120, the system may comprise one or more sensors for determining whether a weight has been added and/or removed from one or more of the passenger seats. The addition or removal of a weight from the seats may indicate to the controlling circuitry that someone has sat down on, or left the seat. The controlling circuitry may, based on such an indication, cause the camera 120 to obtain an image of the seat where the added/removed weight was detected, and transfer that obtained image to the controlling circuitry 110 for determination of whether a passenger is present or has left the vehicle. In the same manner, the system may comprise a sensor detecting whether a door has opened or closed, and the controlling circuitry 110 may cause camera 120 to obtain an image of the passenger seats of the back or front of the vehicle depending on what door was detected to be opened/closed.

The controlling circuitry 110 may further be configured to cause determination of a passenger offset factor of the onboard passenger by obtaining an image (the image may e.g. be obtained by any of the above described embodiments) of the onboard passenger and detecting and identifying at least one insulation layer or garment type of the onboard passenger. The controlling circuitry may e.g. analyze the obtained image. The controlling circuitry may e.g. in some embodiments cause the determiner 111 possibly in collaboration with the library 112 to detect and identify the at least one insulation layer or garment type.

The controlling circuitry 110 may then e.g. cause the determiner 111 and or offset factor module 113 to determine the passenger offset factor based on the detected and identified insulation layer or the garment type (it should be noted that the determination of the passenger offset factor may comprise detecting and identifying both the at least one insulation layer and the garment type).

The controlling circuitry 110 is further configured to cause controlling of the onboard vehicle climate by adjusting a temperature offset based on the determined passenger offset factor of the onboard passenger. The controlling circuitry may e.g. cause the regulating module 114 to regulate control the onboard vehicle climate by adjusting a temperature offset based on the determined passenger offset factor.

In some embodiments, the passenger offset factor and the temperature offset factor may relate to the same offset factor. Hence in some embodiments, the onboard vehicle climate may be adjusted solely by determining a passenger offset factor or temperature offset factor and adjust the climate based on this offset.

In some embodiments, the controlling circuitry 110 is further configured to cause identification of the at least one insulation layer or garment type by causing cross referencing of the obtained image to a library of images comprising different types of isolation layers and garments, and causing identifying of the at least one insulation layer or garment type based on the cross referencing.

The controlling circuitry may e.g. cause the determiner 111 to collaborate with the library 112 to cross reference the obtained image in order to identify the detected insulation layer and/or garment type.

In some embodiments, the library 112 further comprises images of different animal breeds and furs.

In some embodiments, the controlling circuitry 110 is configured to cause labeling of the obtained image with an indication of the identified at least one insulation layer or garment type and storing the image in the library for future references.

Figure 3 illustrates the controlling circuitry 100 in more detail according to some embodiments. The offset factor module 113 may receive one or more different inputs 1131-1134 in order to determine a passenger offset factor (in fig. 3, the determiner 111 of fig 2 may e.g. form part of the overall control circuitry 110 and/or the offset factor module 113). The offset factor module 113 may e.g. receive one or more of an input of at least one detected insulation layer (IL) 1131, a detected garment type (GT) 1132, a determined passenger weight (W) 1133 associated with a detected passenger, and a manually input passenger target temperature (PT) 1134.

It should be noted that the embodiments described in conjunction with fig. 3 are applicable to the embodiments described in conjunction with fig. 2. In Fig 2 and 3, the embodiments has been described as being carried out by different functional units, it should however be noted that these functional units are mere for illustrative purpose, and they may all be replaced by an overlapping controlling circuitry comprised in e.g. an onboard computer which carries out the method as described in conjunction with fig. 1. Hence, it may be understood that all inputs for regulating the onboard vehicle climate is obtained and handled by the controlling circuitry 110 from various external sources such as cameras, sensors, wipers, thermometers etc. The controlling system may thus together with the different sensor inputs (e.g. cameras, pressure sensors located in the seats, wipers, etc.) for part of a climate regulating system configured to carry out the method 1 as previously described.

As noted, the controlling circuitry may cause obtainment and determination of a weight of the onboard passenger, and further basing the passenger offset factor on the determined weight. E.g. by causing input of the determined weight to the offset factor module 113.

In some embodiments, the controlling circuity may further cause obtaining of a height of the present onboard passenger and determining a Body Mass Index (BMI) of the onboard passenger value based on the determined weight and further control the onboard climate by basing the passenger offset factor based on the determined BMI.

Height may e.g. be obtained by the controlling circuitry 110 causing analyzing of the obtained image of the passenger and determine a distance from the passengers head to the ceiling, as well as a distance between the passengers feet and the floor of the vehicle. It may also be contemplated that certain points are measured, such as distance between knees and feet and/or distance between abdomen and top of head in order to determine a height of the passenger.

These inputs may be used to determine the passenger offset factor according to method 1 as described in conjunction with Fig. 1.

The offset factor module 113 may further receive input from the library (LIB) 112. It may e.g. use the library in order to identify the detected insulation layer as well as the detected garment type. The offset factor may e.g. collaborate with the determiner 111 (not shown in fig. 3) to cross reference images from the library with the detected insulation layer and/or garment type in order to perform a correct identification. In the same manner, the offset factor module 113 may transfer obtained images to the library in order to grow the library to comprise more image data which may help teach the system to become better at identifying insulation layer as well as garment type. The offset factor module 113 and the library may further exchange data with a personal profile module (PP) 115. The personal profile module 115 may be caused by the controlling circuitry to generate a passenger profile for the present onboard passenger, wherein the passenger profile comprises a passenger classification, a personal image library of the passenger and a preferred target temperature of the passenger. The passenger profile module 115 may thus collaborate with a passenger classification module 116 in order to receive a passenger classification.

The controlling circuitry may be configured to cause the passenger classification module 116 to determine a classification of the present onboard passenger, wherein the classification comprises at least one of gender, and a determination of whether the onboard passenger is a human being or an animal. This data may also be exchanged with the offset factor module 113 in order to determine the passenger offset factor, or at least provide a default value which the offset factor module 113 may use as starting point for determining the passenger offset factor.

The passenger classification module 116 may exchange information with the library 112. The passenger classification module 116 may e.g. use images from the library to perform gender classification, or type such as human or animal classification on the obtained image of the detected passenger. The library may store classification profiles, as well as personal profiles.

The regulating module 114 may then receive input from offset factor module 113, and possibly from one or more of the personal profile module 115 and the passenger classification module 116 in order to be caused by the controlling circuitry to regulate the onboard climate by adjusting a temperature offset based on the passenger offset factor.

The regulating module 114 may also obtain an outdoor temperature from an outdoor temperature module 1141.

The temperature offset factor may relate to a by the passenger subjectively perceived temperature and/or climate. Or a temperature which the system thinks that the passenger will perceive as a certain temperature.

E.g. the climate system may as default set the temperature to 22 degrees as a start value. When a passenger is detected, a passenger offset factor may be determined which relates to the identification of at least one of an insulation layer and garment type of/on the passenger. The system may determine that based on the identified insulation layer and/or garment type possibly combined with any of the above described inputs for regulating the climate that the passenger will probably be comfortable in a slightly warmer temperature (the passenger may e.g. be wearing only a thin sweater and shorts) and may hence determine the passenger offset factor to be +1 degrees Celsius.

However, since it may be sunny outside, the passenger may think it needs to be cooler in the vehicle and may believe that a comfortable temperature is 18 degrees (and may in some embodiments manually try to set this temperature). However, since the system has determined that the passenger offset factor is +1 degrees from the default value of 22 degrees, it may adjust the climate by adjusting the temperature offset factor so that the interior temperature is in fact 23 degrees. The temperature may either be shown as 22 degrees or even displayed as 18 degrees when it in fact is 23 degrees. Whether or not this climate adjustment was correct may be verified based on whether or not the passenger tries to change the climate/temperature manually and/or adds/removes clothing.

If the adjustment was not to the liking of the passenger, the system may determine that the identified insulation layer/and or garment type may need to be associated with a different temperature offset factor (in some embodiments, especially when taking into consideration other inputs such as outside temperature, number of passengers in the vehicle, passenger classification etc.). All this data may be saved e.g. by the controlling circuitry 110 for future references.

The controlling circuitry 110 may in some embodiments be configured to cause the outdoor temperature module 1141 to determine an outdoor climate, wherein the controlling circuitry 110 is configured to further cause controlling of the onboard vehicle climate by adjusting the temperature offset based on the determined outdoor climate (e.g. by causing the regulating module 114 to adjust the temperature offset).

In some embodiments, the controlling circuitry 110 is further configured to cause determination of whether there are empty seats within the vehicle and control the onboard vehicle climate by adjusting the temperature offset based on the determination of there being empty seats within the vehicle.

The controlling circuitry may e.g. cause various onboard systems such as fans and seat heaters associated with an unoccupied seat to go down in power in order to conserve energy, or increase in power in order to assist in the climate regulation. Compare with the climate zones as described in conjunction with Fig. 1.

As noted earlier, the system 100 may in some embodiments comprise a transceiver circuit 130. The system 100 may e.g. be connected through a wireless communication network to an external server located in e.g. a network cloud. The external server may hold a library (or the library of the system) and the system may transfer data to the external server through the transceiver circuit 130 in order to provide learning material to the method (e.g. the method S1). By using an external server, other vehicles comprising the climate system an applying the method may share what one vehicle has learned in terms of passenger classification, garment and insulation layer identification and temperature regulation based on these inputs (possibly in addition with any of the other inputs for determining the passenger offset factor) for providing a comfortable onboard climate to a passenger. Other vehicles may use this info to further refine their own algorithm for climate regulation provided by the method S1 and to provide an autonomous or partially autonomous climate regulation by correctly identifying a passenger's insulation layer and or garment type. In addition to garment type and insulation layer, one or more of passenger weight, height, BMI, classification, personal preferences, outdoor climate and number of passengers within the car may be taken into consideration for regulating the onboard climate. All of this data may be shared through the server by other vehicles in order to help all vehicles to teach themselves.

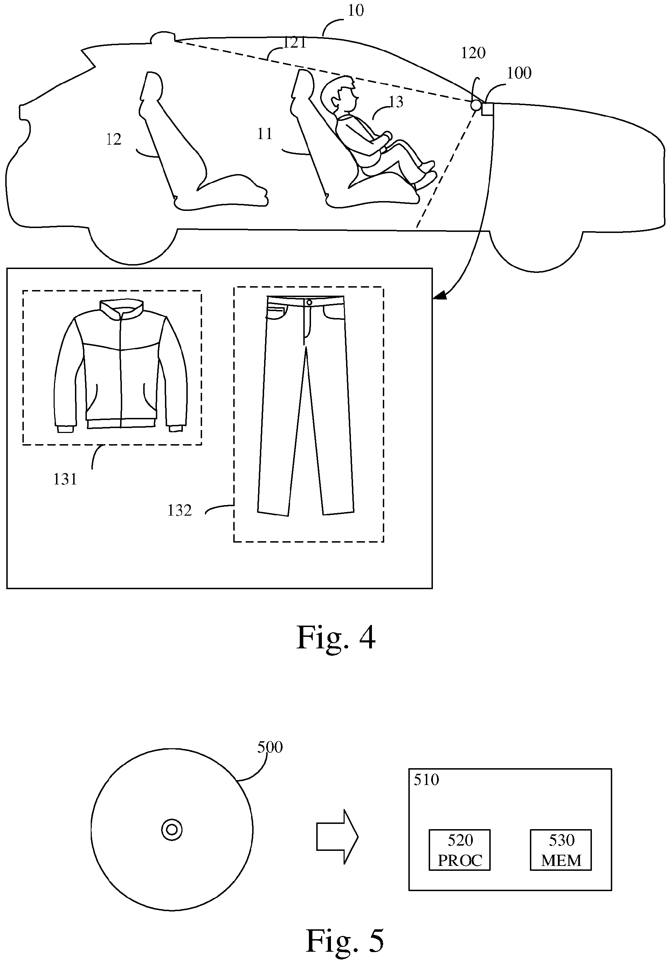

Fig. 4 illustrates a vehicle 10 comprising the system 100 according to some embodiments.

The system 100 may e.g. be the system as described in conjunction with either or both of Figs. 2-3, and may be configured to carry out the method 1 as described in conjunction with Fig. 1.

The vehicle 10 has two seats 11, 12 illustrated (the vehicle may comprise fewer or more seats than illustrated, this is just an example). The system 100 is illustrated to be arranged at the front on the dashboard of the vehicle 10, however other positions are possible and are mainly up to the design of the vehicle. The system 100 comprises a camera 120. The camera 120 may e.g. be a RGB or a heat (IR) camera. In fig. 4, only one camera illuminating the entire car is illustrated, however, the system may as well comprise several cameras. The system may e.g. comprise a dashboard camera, one camera per seat, and/or a ceiling camera. In some embodiments, the system additionally comprises a camera for surveying outdoor surroundings of the vehicle.

A passenger 13 is detected (e.g. by the camera or by another sensor as previously described e.g. in conjunction with Fig. 2 and which may be comprised in the system 100) in the first vehicle seat 11 and the camera 120 obtains an image of the passenger 13 by recording the area 121.

The system 100 may then apply method 1 in order to detect and identify at least one insulation layer of the passenger or a garment type (or both, in some embodiments). From method 1 it may be determined that the passenger wears something resembling a jacket on the upper body, and something resembling pants on the lower body. The method may then by means of stored images comprised in a library of the system 100 (e.g. the library 112) determine the granularity of the jacket and the pants, i.e. determine what type the detected jacket and pants are. By cross referencing the image of the jacket on the passenger with the plurality of different jacket images stored in the library, the method may identify the jacket as an insulated leather jacket 131. The pants may in the same manner be identified as regular jeans 132 (these types are just examples).

The type of garment/insulation layer may further be determined by means of other inputs in correlation with the cross-referencing. E.g., outside temperature and/or outside surroundings may be taken into consideration for determining a garment type. If it is warm outside and the sun is shining, a long sleeved shirt may be determined to be of a thinner material, than if e.g. the outside temperature is below 0 degrees Celsius regardless of whether the sun is shining or not.

The type of garment/insulation layer may further be determined by means of other inputs in correlation with the cross-referencing. E.g., a passenger weight may be obtained from sensors disposed in the seats, and based on the weight, the insulation layer may be e.g. determined as fat or muscle or other body tissue.

Similarly, a passenger's height may be obtained in order to determine a BMI. The BMI may give an indication of a passenger's mass, which may indicate on his or her temperature preferences/perception.

Fig. 5 shows a computer program product 500 comprising a non-transitory computer readable medium carrying a computer program comprising program instructions, the computer program 500 being loadable into a data processing unit 510 comprising a processor (PROC) 520 and a memory (MEM) 530 and configured to cause execution of e.g. the method S1 described herein when the computer program is run by the data processing unit.

The climate regulation method and system described herein enables for an adaptive and autonomous climate regulation which regulates the climate based on few manual inputs, but on several automatic inputs in order to provide an as comfortable climate as possible. By determining at least one insulation layer and/or garment type and possibly combine these inputs with other inputs such as passenger weight, height, BMI, outdoor climate, etc. the climate will be tailored to a specific passenger and will thus provide an optimal climate for each individual.

Furthermore, the embodiments described herein provides for quick and autonomous climate control which continuously monitor the climate and the detected passenger in order to provide a comfortable climate for the duration of the presence of the detected passenger, regardless of whether the passenger adds or removes clothing during its time in the vehicle.

Since the method and system described herein have self-learning capabilities, climate regulation will improve over time, and data may be exchanged with other vehicles in order to improve the self learning of the method and system. Thus, a passenger which enters a new vehicle will thanks to the self learning aspect experience a nice climate, this is e.g. advantageous in public transports such as taxis and busses. In the same manner, a passenger which is detected often in a vehicle (e.g. the owner of the vehicle) will thanks to the self learning aspect, and the personal profile, experience a climate that is tailored to that passenger, and which changes seamlessly to provide optimal climate when the weather as well as the outfits or the physical appearance of the passenger changes. It is contemplated that over time, the passenger will not have to input any manual temperature inputs at all in order to experience a personal optimal climate.

Since the method and system described herein may determine climate zones within the vehicle and based on these (in addition to all other inputs described herein) regulate the climate, the method is energy saving.

The person skilled in the art realizes that the present invention is not limited to the preferred embodiments described above. The person skilled in the art further realizes that modifications and variations are possible within the scope of the appended claims. For example, the number of cameras and sensors as well as their position within a vehicle may vary. The exact algorithm for identifying insulation layer and garment type may differ while still falling within the scope of the claims. Additionally, variations to the disclosed embodiments can be understood and effected by the skilled person in practicing the claimed invention as defined in the appended claims, from a study of the drawings, the disclosure, and the appended claims.

### List of references:

1: Method 1
S1: step 1 of method 1
S2: step 2 of method 1
S3: step 3 of method 1
10: Vehicle
11: Vehicle seat 1
12: Vehicle seat 2
13: Detected passenger
100: System
110: controlling circuitry (CNTR)
111: Determiner (DET)
112: Library (LIB)
113: Offset factor module (OFF)
1131: Insulation layer input (IL)
1132: Garment type input (GT)
1133: weight input (W)
1134: Preferred temperature input (PT)
114: Regulating module (REG)
1141: Outside temperature input (OT)
115: Passenger Profile module (PP)
116: Passenger Classification module (PC)
1161: Gender input (G)
1162: Type input (T)
120: Camera (CAM)
130: Transceiver circuit (RX/TX)
131: correlation image jacket
132: correlation image pants
500: Computer program product
510: Data processing unit
520: processor (PROC)
530: Memory (MEM)

## Claims

1. A method (1) for regulating onboard vehicle climate, the method comprising:
- determining (S1) a presence of an onboard passenger within the vehicle;
- determining (S2) a passenger offset factor of the onboard passenger by obtaining an image of the onboard passenger and detecting and identifying at least one insulation layer or garment type of the onboard passenger, wherein determining the passenger offset factor is based on the detected and identified at least one isolation layer or garment type and wherein the at least one insulation layer or garment type is identified by cross referencing the obtained image to a library of images comprising different types of isolation layers and garments, and identifying the at least one insulation layer or garment type based on the cross referencing; and
- controlling (S3) the onboard vehicle climate by adjusting a temperature offset based on the determined passenger offset factor of the onboard passenger,
**characterized in that** the method further comprising:
- generating a passenger profile for the present onboard passenger, wherein the passenger profile comprises an image library of the passenger and a preferred target temperature of the passenger,
and wherein the image library of the passenger is used as the library of images comprising different types of isolation layers and garments.

2. The method according to claim 1, further comprising:
- determining a weight of the onboard passenger, and further basing the passenger offset factor on the determined weight.

3. The method according to claim 2, further comprising:
- obtaining a height of the present onboard passenger and determining a Body Mass Index (BMI) of the onboard passenger value based on the determined weight and further control the onboard climate by adapting the temperature offset based on the determined BMI.

4. The method according to any of the previous claims, further comprising:
- obtaining a temperature input from the onboard passenger, the input relating to the preferred target temperature, and adjusting the onboard vehicle temperature by further basing the passenger offset factor based on the obtained temperature input.

5. The method according to claim 4, wherein the library further comprises images of different animal breeds and furs.

6. The method according to any of the previous claims, further comprising:
- labeling the obtained image with an indication of the identified at least one insulation layer or garment type and storing the image in the library for future references.

7. The method according to any of the previous claims, further comprising:
- determining an outdoor climate, and further controlling the onboard vehicle climate by adjusting the temperature offset based on the determined outdoor climate.

8. The method according to claim 7, wherein the determined outdoor climate is used as an input for determining the passenger offset factor.

9. The method according to any of the previous claims, further comprising:
- determining whether there are empty seats within the vehicle and control the onboard vehicle climate by adjusting the temperature offset based on the determination of there being empty seats within the vehicle.

10. A computer program product (500) comprising a non-transitory computer readable medium carrying a computer program comprising program instructions, the computer program being loadable into a data processing unit (510) and configured to cause execution of the method (1) according to any of claims 1 to 9 when the computer program is run by the data processing unit.

11. A system (100) for regulating onboard vehicle climate, the system comprising at least one camera (120) and controlling circuitry (110) configured to cause:
- determination of a presence of an onboard passenger within the vehicle;
- determination of a passenger offset factor of the onboard passenger by obtaining an image of the onboard passenger and detecting and identifying at least one insulation layer or garment type of the onboard passenger, wherein determining the passenger offset factor is based on the detected and identified at least one isolation layer or garment type and wherein the at least one insulation layer or garment type is identified by cross referencing the obtained image to a library of images comprising different types of isolation layers and garments, and identifying the at least one insulation layer or garment type based on the cross referencing; and
- controlling of the onboard vehicle climate by adjusting a temperature offset based on the determined passenger offset factor of the onboard passenger
**characterized in that** controlling circuitry (110) is further configured to cause:
- generation of a passenger profile for the present onboard passenger, wherein the passenger profile comprises an image library of the passenger and a preferred target temperature of the passenger,
and wherein the image library of the passenger is used as the library of images comprising different types of isolation layers and garments.

12. A vehicle (10) comprising the system (100) according to claim 11.

## Patentansprüche

1. Verfahren (1) zum Regeln von Klima an Bord eines Fahrzeugs, wobei das Verfahren Folgendes umfasst:
- Bestimmen (S1) eines Vorhandenseines eines Fahrgastes an Bord innerhalb des Fahrzeugs;
- Bestimmen (S2) eines Fahrgastversatzfaktors des Fahrgastes an Bord durch Erhalten eines Bildes des Fahrgastes an Bord und Erfassen und Identifizieren von mindestens einer Isolierschicht oder einer Bekleidungsart des Fahrgastes an Bord, wobei das Bestimmen des Fahrgastversatzfaktors auf der erfassten und identifizierten mindestens einen Isolierschicht oder Bekleidungsart basiert und wobei die mindestens eine Isolierschicht oder Bekleidungsart identifiziert wird, indem ein Querverweis zwischen dem erhaltenen Bild und einer Bibliothek von Bildern, die verschiedene Arten von Isolierschichten und Bekleidungen umfasst, hergestellt, und die mindestens eine Isolierschicht oder Bekleidungsart basierend auf dem Querverweis identifiziert wird; und
- Steuern (S3) des Klimas an Bord des Fahrzeugs durch Einstellen eines Temperaturversatzes basierend auf dem bestimmten Fahrgastversatzfaktor des Fahrgastes an Bord,
**dadurch gekennzeichnet, dass** das Verfahren ferner Folgendes umfasst:
- Erzeugen eines Fahrgastprofils für den vorhandenen Fahrgast an Bord, wobei das Fahrgastprofil eine Bildbibliothek des Fahrgastes und eine bevorzugte Zieltemperatur des Fahrgastes umfasst,
und wobei die Bildbibliothek des Fahrgastes als die Bibliothek von Bildern, die verschiedene Arten von Isolierschichten und Bekleidungen umfasst, verwendet wird.

2. Verfahren nach Anspruch 1, ferner umfassend:
- Bestimmen eines Gewichts des Fahrgastes an Bord, und ferner Basieren des Fahrgastversatzfaktors auf dem bestimmten Gewicht.

3. Verfahren nach Anspruch 2, ferner umfassend:
- Erhalten einer Höhe des vorhandenen Fahrgastes an Bord und Bestimmen eines Body Mass Index (BMI) des Wertes des Fahrgastes an Bord basierend auf dem bestimmten Gewicht und ferner Steuern des Klimas an Bord durch Anpassen des Temperaturversatzes basierend auf dem bestimmten BMI.

4. Verfahren nach einem der vorhergehenden Ansprüche, ferner umfassend:
- Erhalten einer Temperatureingabe von dem Fahrgast an Bord, wobei sich die Eingabe auf die bevorzugte Zieltemperatur bezieht, und Einstellen der Temperatur an Bord des Fahrzeugs durch weiteres Basieren des Fahrgastversatzfaktors basierend auf der erhaltenen Temperatureingabe.

5. Verfahren nach Anspruch 4, wobei die Bibliothek ferner Bilder von verschiedenen Tierrassen und -feilen umfasst.

6. Verfahren nach einem der vorhergehenden Ansprüche, ferner umfassend:
- Markieren des erhaltenen Bildes mit einer Angabe der identifizierten mindestens einen Isolierschicht oder Bekleidungsart und Speichern des Bildes in der Bibliothek für zukünftige Referenzen.

7. Verfahren nach einem der vorhergehenden Ansprüche, ferner umfassend:
- Bestimmen eines Außenklimas und ferner Steuern des Klimas an Bord des Fahrzeugs durch Einstellen des Temperaturversatzes basierend auf dem bestimmten Außenklima.

8. Verfahren nach Anspruch 7, wobei das bestimmte Außenklima als eine Eingabe zum Bestimmen des Fahrgastversatzfaktors verwendet wird.

9. Verfahren nach einem der vorhergehenden Ansprüche, ferner umfassend:
- Bestimmen, ob es leere Sitze innerhalb des Fahrzeugs gibt und Steuern des Klimas an Bord des Fahrzeugs durch Einstellen des Temperaturversatzes basierend auf der Bestimmung, ob es leere Sitze innerhalb des Fahrzeugs gibt.

10. Computerprogrammprodukt (500), umfassend ein nichtflüchtiges computerlesbares Medium, das ein Computerprogramm trägt, das Programmanweisungen umfasst, wobei das Computerprogramm in eine Datenverarbeitungseinheit (510) geladen werden kann und konfiguriert ist, um Ausführung des Verfahrens (1) nach einem der Ansprüche 1 bis 9 zu bewirken, wenn das Computerprogramm durch die Datenverarbeitungseinheit ausgeführt wird.

11. System (100) zum Regeln von Klima an Bord eines Fahrzeugs, wobei das System mindestens eine Kamera (120) und Steuerschaltung (110) umfasst, die konfiguriert ist, um Folgendes zu bewirken:
- Bestimmen eines Vorhandenseins eines Fahrgastes an Bord innerhalb des Fahrzeugs;
- Bestimmen eines Fahrgastversatzfaktors des Fahrgastes an Bord durch Erhalten eines Bildes des Fahrgastes an Bord und Erfassen und Identifizieren von mindestens einer Isolierschicht oder Bekleidungsart des Fahrgastes an Bord, wobei das Bestimmen des Fahrgastversatzfaktors auf der erfassten und identifizierten mindestens einen Isolierschicht oder Bekleidungsart basiert und wobei die mindestens eine Isolierschicht oder Bekleidungsart identifiziert wird, indem ein Querverweis zwischen dem erhaltenen Bild und einer Bibliothek von Bildern, die verschiedene Arten von Isolierschichten und Bekleidungen umfasst, hergestellt, und die mindestens eine Isolierschicht oder Bekleidungsart basierend auf dem Querverweis identifiziert wird; und
- Steuern des Klimas an Bord des Fahrzeugs durch Einstellen eines Temperaturversatzes basierend auf dem bestimmten Fahrgastversatzfaktor des Fahrgastes an Bord,
**dadurch gekennzeichnet, dass** die Steuerschaltung (110) ferner konfiguriert ist, um Folgendes zu bewirken:
- Erzeugen eines Fahrgastprofils für den vorhandenen Fahrgast an Bord, wobei das Fahrgastprofil eine Bildbibliothek des Fahrgastes und eine bevorzugte Zieltemperatur des Fahrgastes umfasst,
und wobei die Bildbibliothek des Fahrgastes als die Bibliothek von Bildern, die verschiedene Arten von Isolierschichten und Bekleidungen umfasst, verwendet wird.

12. Fahrzeug (10), umfassend das System (100) nach Anspruch 11.

## Revendications

1. Procédé (1) pour réguler le climat à bord d'un véhicule, le procédé comprenant :
- la détermination (S1) de la présence d'un passager embarqué à l'intérieur du véhicule ;
- la détermination (S2) d'un facteur de décalage de passager du passager embarqué en obtenant une image du passager embarqué et en détectant et en identifiant au moins une couche d'isolation ou un type de vêtement du passager embarqué, dans lequel la détermination du facteur de décalage de passager est basée sur l'au moins une couche d'isolation ou type de vêtement détecté et identifié et dans lequel l'au moins une couche d'isolation ou le type de vêtement est identifié en établissant des références croisées de l'image obtenue à une bibliothèque d'images comprenant différents types de couches d'isolation et de vêtements, et en identifiant l'au moins une couche d'isolation ou le type de vêtement basé sur les références croisées ; et
- la commande (S3) du climat à bord du véhicule en ajustant un décalage de température basé sur le facteur de décalage de passager déterminé du passager embarqué,
**caractérisé en ce que** le procédé comprend en outre :
- la génération d'un profil de passager pour le passager présent embarqué, dans lequel le profil de passager comprend une bibliothèque d'images du passager et une température cible préférée du passager,
et dans lequel la bibliothèque d'images du passager est utilisée comme bibliothèque d'images comprenant différents types de couches d'isolation et de vêtements.

2. Procédé selon la revendication 1, comprenant en outre :
- la détermination d'un poids du passager embarqué, et le fait de baser en outre le facteur de décalage de passager sur le poids déterminé.

3. Procédé selon la revendication 2, comprenant en outre :
- l'obtention d'une taille du passager présent embarqué et la détermination d'un indice de masse corporelle (IMC) de la valeur du passager embarqué sur la base du poids déterminé et commander en outre le climat à bord en adaptant le décalage de température sur la base de l'IMC déterminé.

4. Procédé selon l'une quelconque des revendications précédentes, comprenant en outre :
- l'obtention d'une entrée de température du passager embarqué, l'entrée concernant la température cible préférée, et l'ajustement de la température à bord du véhicule en basant en outre le facteur de décalage du passager sur la base de l'entrée de température obtenue.

5. Procédé selon la revendication 4, dans lequel la bibliothèque comprend en outre des images de différentes races animales et fourrures.

6. Procédé selon l'une quelconque des revendications précédentes, comprenant en outre :
- l'étiquetage de l'image obtenue avec une indication d'au moins une couche d'isolation ou type de vêtement identifié et stocker l'image dans la bibliothèque pour de futures références.

7. Procédé selon l'une quelconque des revendications précédentes, comprenant en outre :
- la détermination d'un climat extérieur, et la commande en outre du climat à bord du véhicule en ajustant le décalage de température sur la base du climat extérieur déterminé.

8. Procédé selon la revendication 7, dans lequel le climat extérieur déterminé est utilisé comme entrée pour déterminer le facteur de décalage de passager.

9. Procédé selon l'une quelconque des revendications précédentes, comprenant en outre :
- la détermination s'il y a des sièges vides à l'intérieur du véhicule et commander le climat à bord du véhicule en ajustant le décalage de température sur la base de la détermination de l'existence de sièges vides à l'intérieur du véhicule.

10. Produit de programme informatique (500) comprenant un support non transitoire lisible par ordinateur portant un programme informatique comprenant des instructions de programme, le programme informatique étant chargeable dans une unité de traitement de données (510) et configuré pour amener l'exécution du procédé (1) selon l'une quelconque des revendications 1 à 9 lorsque le programme informatique est exécuté par l'unité de traitement de données.

11. Système (100) pour réguler le climat à bord d'un véhicule, le système comprenant au moins une caméra (120) et des circuits de commande (110) configurés pour provoquer :
- la détermination d'une présence d'un passager embarqué à l'intérieur du véhicule ;
- la détermination d'un facteur de décalage de passager du passager embarqué en obtenant une image du passager embarqué et en détectant et en identifiant au moins une couche d'isolation ou un type de vêtement du passager embarqué, dans lequel la détermination du facteur de décalage de passager est basée sur l'au moins une couche d'isolation ou type de vêtement détecté et identifié et dans lequel l'au moins une couche d'isolation ou type de vêtement est identifié en établissant des références croisées de l'image obtenue à une bibliothèque d'images comprenant différents types de couches d'isolation et de vêtements, et en identifiant l'au moins une couche d'isolation ou type de vêtement sur la base des références croisées ; et
- la commande du climat à bord du véhicule en ajustant un décalage de température basé sur le facteur de décalage de passager déterminé du passager embarqué
**caractérisé en ce que** le circuit de commande (110) est en outre configuré pour provoquer :
- la génération d'un profil de passager pour le passager présent embarqué, dans lequel le profil du passager comprend une bibliothèque d'images du passager et une température cible préférée du passager,
et dans lequel la bibliothèque d'images du passager est utilisée comme bibliothèque d'images comprenant différents types de couches d'isolation et de vêtements.

12. Véhicule (10) comprenant le système (100) selon la revendication 11.
